# EUROPÄISCHE PATENTSCHRIFT

(11) **EP 3 419 815 B1**
(45) Veröffentlichungstag und Bekanntmachung des Hinweises auf die Patenterteilung: **16.03.2022**
(21) Anmeldenummer: 16819919.8
(22) Anmeldetag: 21.12.2016
(51) Int. Cl.: B29C 70/32, B29C 53/58, B29C 70/86, B29C 70/38, B29B 11/16

(54) **WERKZEUGSYSTEM UND VERFAHREN ZUR HERSTELLUNG EINES FASERVERBUNDHALBZEUGS SOWIE VERFAHREN ZUR HERSTELLUNG EINES FASERVERBUNDBAUTEILS**
TOOL SYSTEM AND METHOD FOR PRODUCING A FIBRE-COMPOSITE PRE-PRODUCT, AND METHOD FOR PRODUCING A FIBRE-COMPOSITE COMPONENT
SYSTÈME D'OUTIL ET PROCÉDÉ POUR LA FABRICATION D'UN PRODUIT SEMI-FINI COMPOSITE RENFORCÉ DE FIBRES AINSI QUE PROCÉDÉ POUR LA FABRICATION D'UNE PIÈCE COMPOSITE RENFORCÉE DE FIBRES

(30) Priorität: 26.02.2016 DE 102016203073
(43) Veröffentlichungstag der Anmeldung: 02.01.2019
(73) Patentinhaber: Airbus Defence and Space GmbH, 82024 Taufkirchen (DE)
(72) Erfinder: FINKENWERDER, Felipe Alberto, 76694 Forst (DE); GEISTBECK, Matthias, 87719 Mindelheim (DE)
(74) Vertreter: Isarpatent
(86) Internationale Anmeldenummer: PCT/EP2016/082241
(87) Internationale Veröffentlichungsnummer: WO 2017/144143

(56) Entgegenhaltungen:
- EP-A1- 2 225 092
- CA-A1- 2 678 912
- DE-A1-102015 110 322
- US-A1- 2010 052 203

## Beschreibung

Die vorliegende Erfindung betrifft ein Werkzeugsystem und ein Verfahren zur Herstellung eines Faserverbundhalbzeugs sowie Verfahren zur Herstellung eines Faserverbundbauteils.

Faserverbundbauteile, die aus einem Matrixmaterial und in diesem eingebetteten Verstärkungsfasern gebildet sind, werden häufig als Strukturbauteile in Rumpfstrukturen, z.B. von Flugzeugen eingesetzt. In der Regel wird ein Faserverbundhalbzeug zur Herstellung eines solchen Faserverbundbauteils dadurch gebildet, dass ein Kern, der die äußere Gestalt des herzustellenden Faserverbundbauteils aufweist, mit den Verstärkungsfasern umwickelt wird. Zur Herstellung des Faserverbundbauteils wird dieses Faserverbundhalbzeug anschließend mit dem Matrix-material infiltriert.

Die WO 2011/096805 A1 offenbart ein Werkzeugsystem und ein Verfahren zur Herstellung eines Faserverbundhalbzeugs, bei dem ein kreisringförmiger Kern mittels Antriebsrollen um dessen Mittelachse gedreht wird, während zwei stationäre Wickelringe um den Kern rotieren und diesen mit Fasermaterial umwickeln.

Aus der DE 10 2015 109 222 A1 ist eine Vorrichtung zum Verbinden von zwei Bauteilen in einem Fügebereich bekannt, wobei die Vorrichtung einen mittels eines Roboters bewegbaren kreissegmentförmigen Wickelring zum Umwickeln der Bauteile im Fügebereich mit Gewebeband aufweist.

Die DE 10 2015 110 322 A1 offenbart eine Vorrichtung gemäß dem Oberbegriff des Anspruchs 1.

Es ist Aufgabe der vorliegenden Erfindung, ein Werkzeugsystem und ein Verfahren, mit dem jeweils Faserverbundhalbzeuge mit einem von einem Faserwerkstoff umwickelten Kern auf effiziente und zuverlässige Weise herstellbar sind, sowie ein Verfahren zur Herstellung eines Faserverbundbauteils aus solchen Faserverbundhalbzeugen bereitzustellen.

Diese Aufgabe wird jeweils durch ein Werkzeugsystem mit den Merkmalen des Anspruchs 1, ein Verfahren mit den Merkmalen des Anspruchs 9 gelöst.

Vorteilhafte Ausgestaltungen und Weiterbildungen sind in den auf die unabhängigen Ansprüche rückbezogenen Unteransprüchen angegeben.

Nach einem ersten Aspekt der Erfindung ist ein Werkzeugsystem zur Herstellung eines Faserverbundhalbzeugs vorgesehen, wobei das Werkzeugsystem eine Halteanordnung mit zumindest zwei Haltevorrichtungen zum Halten eines mit einem band- oder fadenförmigen Faserwerkstoff zu umwickelnden Kerns und eine Wickelvorrichtung mit zumindest einem um eine Rotationsachse drehbaren Rotor, der einen Wickelraum zur Aufnahme des Kerns zumindest abschnittsweise umgrenzt, zumindest einem relativ zu dem Rotor ortsfest angeordneten Materialträger zum Bereitstellen des Faserwerkstoffs und einem dem jeweiligen Materialträger zugeordneten von dem Rotor zu der Rotationsachse hin abstehenden Führungsbügel oder Ablagekopf zum Führen des Faserwerkstoffs aufweist.

Die Wickelvorrichtung ist translatorisch entlang einer Bewegungsbahn derart bewegbar, dass eine Bewegung der Wickelvorrichtung entlang der Bewegungsbahn zumindest eine Richtungskomponente aufweist, die mit der Rotationsachse übereinstimmt.

Eine Außenkontur der Wickelvorrichtung definiert während der Bewegung entlang der Bewegungsbahn eine Hüllfläche, die einen Arbeitsraum der Wickelvorrichtung definiert bzw. diesen zumindest abschnittsweise umgrenzt, wobei die Haltevorrichtungen mit der Wickelvorrichtung jeweils derart gekoppelt sind, dass diese während der translatorischen Bewegung der Wickelvorrichtung jeweils aus dem Arbeitsraum der Wickelvorrichtung heraus bewegbar sind.

Insbesondere sind die Haltevorrichtungen mit der Wickelvorrichtung jeweils funktional derart gekoppelt sind, dass diese während der translatorischen Bewegung der Wickelvorrichtung jeweils aus dem Arbeitsraum der Wickelvorrichtung heraus bewegbar sind.

Aufgrund der Tatsache, dass die Haltevorrichtungen mit der Wickelvorrichtung jeweils derart gekoppelt sind, dass diese während der translatorischen Bewegung der Wickelvorrichtung jeweils aus dem Arbeitsraum der Wickelvorrichtung heraus bewegbar sind, können insbesondere als geschlossene Rahmen ausgeführte Kerne mit einem durchgehenden bandförmigen Fasermaterial umwickelt werden, da die Wickelvorrichtung durchgehend, z.B. ohne Umkehrung einer Vorschubrichtung, entlang des gesamten Umfangs des Kerns bewegt werden kann.

Die Materialträger können beispielsweise als Rollen oder Spulen ausgeführt sein, auf denen der band- oder fadenförmige Faserwerkstoff in gewickelter Form lagerbar und durch Abziehen entnehmbar ist.

Die Anzahl der Materialträger je Rotor kann beispielsweise abhängig von der Breite des Faserwerkstoffs, des Kernprofilquerschnitts und/oder eines beabsichtigten Verlaufs des Faserwerkstoffs relativ zu dem Kern gewählt werden. Bei Faserwerkstoffen mit geringer Breite oder geringem Fadendurchmesser kann beispielsweise eine hohe Anzahl von Materialträgern, z.B. in einem Bereich zwischen 10 und 500 Stück je Rotor vorgesehen sein. Bei Faserwerkstoffen mit größerer Breite, wie z.B. bei sogenannten Prepregbändern kann eine geringere Anzahl von Materialträgern vorgesehen sein, z.B. zwischen 1 und 100 Materialträger je Rotor.

Der Rotor kann allgemein als ein teilbarer Kreisring oder kreissegmentförmig ausgebildet sein. Insbesondere kann vorgesehen sein, dass der Rotor die Rotationsachse als ein durchgehender teilbarer Kreisring oder als ein Kreissegment umgibt. Beide Formen haben den Vorteil, dass in deren Wickelraum ein als geschlossener Rahmen ausgeführter Kern einführbar ist. Besonders vorteilhaft kann dies durch eine Unterbrechung des Umfangs bei einem kreissegmentförmigen Rotor erfolgen. Weiterhin ist es mit einem kreissegmentförmigen Rotor möglich, von dem Kern abstehende Strukturen zu umwickeln, da der Rotor mit der Unterbrechung über diese hinweg geführt werden kann. Ein als teilbarer Kreisring ausgeführter Rotor bietet weiterhin den Vorteil, dass aufgrund des durchgehenden Umfangs eine besonders hohe Anzahl von Materialträgern vorsehbar ist. Ein weiterer Vorteil eines geschlossenförmigen oder kreisringförmigen Rotors ist, dass dieser eine Übertragungsvorrichtung zur über den Querschnittsumfang des Kerns ununterbrochene Übertragung eines Mediums, wie z. B. Druckluft oder eines Kunststoffmaterials und/oder zur Übertragung elektrischer Energie an an dem Rotor angebrachten Komponenten, wie z.B. die Materialträger oder einer Heizvorrichtung ausbildet.

Die Wickelvorrichtung kann insbesondere zumindest einen weiteren drehbaren Rotor aufweisen, wobei die Rotoren konzentrisch zueinander angeordnet sind. Allgemein können mehrere Rotoren vorgesehen sein, die jeweils konzentrisch zueinander angeordnet sind. Darunter ist insbesondere zu verstehen, dass diese um dieselbe Rotationsachse drehbar sind, wobei die Rotoren entlang der Rotationsachse versetzt angeordnet sein können. Auf diese Weise kann eine besonders schnelle Umwicklung des Kerns erfolgen, da jeder Rotor eine Faserschicht wickeln und damit erzeugen kann. Es können somit gleichzeitig mehrere aufeinanderliegende Faserschichten erzeugt werden. Insbesondere im dem Fall, dass an jedem Rotor mehrere Materialträger vorgesehen sind, kann jeder Rotor vorteilhaft eine unidirektionale Faserschicht wickeln.

Das Werkzeugsystem kann beispielsweise derart konfiguriert sein, dass mehrere parallel zueinander gleichsinnig drehende Rotoren vorgesehen sind. Insbesondere kann bei der Bearbeitung von geschlossenen, rahmenförmigen Kernen durch jeden Rotor beispielsweise ein Faserbündel an dem Kern abgelegt werden, wobei aufgrund des Vorhandenseins mehrerer Rotoren mehrere Faserbündel bündig nebeneinander auf dem Kern ablegbar sind. Damit kann eine Faserschicht mit mehreren einzelnen Faserbündeln, die bündig nebeneinander liegen auf schnelle und effiziente Weise gebildet werden. Besonders vorteilhaft lässt sich auf diese Weise ein unidirektionales Wickelmuster ausbilden.

Allgemein kann dieser Vorgang mehrmals nacheinander durchführbar sein. Nach eine gegebenen Anzahl an hintereinander folgenden Durchgänge entstehen mehrere bevorzugt unidirektionale Faserschichten. Auf diese Weise können aus wenigen Fasersträngen mehrere zusammenhängende Faserschichten gebildet werden, wobei ein durchgehender Faserstrang mehrere übereinanderliegende Schichten ausbildet. Dadurch kann eine besonders hohe mechanische Festigkeit in einem Faserverbundbauteil, das aus einem mittels des erfindungsgemäßen Werkzeugsystems hergestellten Faserverbundhalbzeugs gebildet wird.

Drehen die einzelne Rotoren gegensinnig zueinander entsteht einen allgemein Kreuzwickelmuster, mit sich überkreuzenden Endlosfasersträngen.

Das Werkzeugsystem kann eine Wickelvorrichtungs-Positioniereinrichtung zum Bewegen der der Wickelvorrichtung entlang der Bewegungsbahn aufweisen.

Die Wickelvorrichtungs-Positioniereinrichtung kann insbesondere als eine Führungsanordnung mit zumindest einer in einer ersten Raumrichtung verlaufenden erste Führungsschiene, einer an der ersten Führungsschiene geführten und in einer zweiten Raumrichtung verlaufenden zweite Führungsschiene und einer an der zweiten Führungsschiene geführten dritten Führungsschiene, die in einer dritten Raumrichtung verläuft, und mit einer Halterung, die an der dritten Führungsschiene geführt und mit der Wickelvorrichtung verbunden ist, realisiert sein.

Auf diese Weise ist die Wickelvorrichtung in einem dreidimensionalen Raum frei bewegbar. Damit ist die Wickelvorrichtung auf zuverlässige und einfache Weise insbesondere relativ zu gekrümmten und rahmenförmigen Kernen positionierbar. Alternativ zu der vorbeschriebenen Führungsanordnung kann die Wickelvorrichtungs-Positioniereinrichtung durch einen Roboter gebildet sein, der eine in drei Raumrichtungen bewegbare Armkinematik aufweist, wobei die Armkinematik eine Halterung aufweist, die mit der Wickelvorrichtung verbunden ist. Die Armkinematik des Roboters kann beispielsweise sechs Drehachsen aufweisen, die eine Bewegung der Wickelvorrichtung entlang des Kerns in einem dreidimensionalen Raum zulassen.

Die Halterung der Wickelvorrichtungs-Positionierungsvorrichtung verbindet diese mit der Wickelvorrichtung. Insbesondere ist die Wickelvorrichtung durch die Halterung um eine Halterungsachse drehbar mit der Wickelvorrichtungs-Positioniereinrichtung verbunden. Auf diese Weise kann zusätzlich die Ausrichtung der Rotationsachse des Rotors relativ zu dem Kern, insbesondere relativ zu dem Kernquerschnitt verändert werden. Auf diese Weise lässt sich der Verlauf des band- oder fadenförmigen Faserwerkstoffs auf dem Kern vorteilhaft variieren. Beispielsweise kann eine für die Festigkeit eines aus dem herzustellenden Faserverbundhalbzeugs gefertigten Bauteils vorteilhafte Konfiguration erzielt werden.

Die zumindest zwei Haltevorrichtungen der Halteanordnung sind als linear verschiebbare Klemmteile oder als öffen- und schließbare Klammern ausgebildet sein. Mit diesen möglichen Konfigurationen kann jeweils eine modulare Halteanordnung aufgebaut werden, die auf einfache Weise an die Größe und die Geometrie des Kerns anpassbar ist.

Das Werkzeugsystem kann weiterhin eine Steuerungsvorrichtung aufweisen, mittels derer eine Rotationsgeschwindigkeit des Rotors, eine Vorschubrichtung und Vorschubgeschwindigkeit der Wickelvorrichtung entlang der Bewegungsbahn sowie eine jeweilige Position der Haltevorrichtungen einstellbar sind.

Die Steuerungsvorrichtung kann insbesondere funktional mit einer oder mehreren der oben beschriebenen Komponenten gekoppelt sein. Beispielsweise kann die Steuerungsvorrichtung Funktionen zum Erzeugen von Steuerbefehlen aufweisen, aufgrund derer zumindest eine oder mehrere der folgenden Aktionen erfolgt:
- Einstellen einer Rotationsgeschwindigkeit des Rotors, z.B. durch Einstellen einer Drehzahl eines den Rotor antreibenden Motors,
- Einstellen einer Vorschubrichtung und einer Vorschubgeschwindigkeit, z.B. durch Betätigen von den jeweiligen Komponenten der Wickelvorrichtungs-Positioniereinrichtung zugeordneten Stellantrieben.

Die Steuerbefehle können beispielsweise als feste Abfolge von Signalen in einem Datenspeicher der Steuerungsvorrichtung vorliegen. Zum Beispiel können für verschiedene bekannte Geometrien des Kerns bestimmte Steuerbefehle aus dem Datenspeicher abgerufen werden. Alternativ können die Steuerbefehle auch aufgrund von durch einen oder mehrere Sensoren erfassten Größen erzeugt werden. Beispielsweise kann an der Wickelvorrichtung ein Abstandssensor zum Erfassen einer Position der Wickelvorrichtung relativ zu dem Kern vorgesehen sein. Auf diese Weise kann einen automatisiertes Regelungs- oder Steuerungssystem gebildet werden.

Ein weiterer Aspekt der Erfindung betrifft ein Verfahren zur Herstellung eines Faserverbundhalbzeugs mit den folgenden Schritten:
- Umwickeln eines durch eine Halteanordnung mit zumindest zwei Haltevorrichtungen gehaltenen Kerns mit einem band- oder fadenförmigen Faserwerkstoff durch translatorisches Bewegen einer Wickelvorrichtung entlang des Kerns,
   wobei die Wickelvorrichtung zumindest einen sich um eine Rotationsachse drehenden Rotor, der einen Wickelraum definiert, in dem der Kern angeordnet ist, zumindest einen relativ zu dem Rotor ortsfest angeordneten Materialträger, von welchem der Faserwerkstoff abgezogen wird, und einen dem jeweiligen Materialträger zugeordneten von dem Rotor zu der Rotationsachse hin abstehenden Führungsbügel, der den Faserwerkstoff relativ zu dem Kern führt, aufweist,
   wobei das translatorische Bewegen der Wickelvorrichtung derart erfolgt, dass zumindest eine Richtungskomponente der Bewegung der Wickelvorrichtung mit der Rotationsachse übereinstimmt, wobei eine Außenkontur der Wickelvorrichtung während der Bewegung entlang des Kerns eine Hüllfläche definiert, die einen Arbeitsraum der Wickelvorrichtung definiert,
- Herausbewegen jeweils einer der Haltevorrichtungen aus dem Arbeitsraum der Wickelvorrichtung während des Umwickelns eines Haltebereichs des Kerns, an welchem dieser von der jeweiligen Haltevorrichtung gehalten wird.

Durch das Umwickeln des Kerns in dem Wickelraum des sich drehenden Rotors, ist es möglich den Kern, insbesondere auch als geschlossene Rahmen vorliegende Kerne, mit sogenannten "Endlosfasern", also einem durchgehenden Faserband oder -faden zu umwickeln. Dadurch wird die mechanische Stabilität eines Faserverbundbauteils, das aus einem auf die vorbeschriebene Weise hergestellten Faserverbundhalbzeug hergestellt wird, erhöht. Dies ist insbesondere deshalb der Fall, da die mechanischen Eigenschaften eines Faserverbundbauteils von der Faserlänge abhängen, wobei die Bauteilfestigkeit mit zunehmender Faserlänge steigt.

Als Kern kann beispielsweise aus einem schaumstoffartigen Material oder einem Vollmaterial gebildet sein. Allgemein kann der Kern aus einem Kunststoffmaterial, einem Holz-, Metall- oder Korkmaterial oder dergleichen gebildet sein. Schaumstoffkerne eignen sich insbesondere zur Herstellung von Faserverbundbauteilen in sogenannter Sandwichbauweise. Hierbei verbleibt der Kern nach dem Umwickeln im Halbzeug und kann auch aus dem aus diesem hergestellten Faserverbundbauteil verbleiben. Aufgrund der allgemein geringen Dichte von Schaumstoffmaterial wird auf diese Weise bei nur geringer Gewichtszunahme die mechanischen Eigenschaften des Halbzeugs/Bauteils verbessert. Kerne aus einen Vollmaterial eignen sich insbesondere zur Herstellung von Faserverbundbauteilen in monolithischer Bauweise, wobei der Kern nach dem Umwickeln aus dem Halbzeug oder gegebenenfalls nach der Herstellung eines Faserverbundbauteils aus dem Halbzeug aus dem Bauteil entfernt wird.

Der Kern kann weiterhin eine offene Form, z.B. stabförmig, kurvenförmig oder dergleichen aufweisen. Weiterhin kann der Kern eine geschlossene Form oder Gestalt, z.B. eine elliptische, kreisförmige, dreieckige, rechteckförmige oder polygonale Form oder dergleichen aufweisen. Insbesondere kann der Kern auch in mehreren Richtungen gekrümmt verlaufen. Die Kerne können z.B. eine rechteck-, trapez-, dreieck- oder kreisförmige oder elliptische Querschnittsform aufweisen.

Der band- oder fadenförmige Faserwerkstoff kann als ein Roving, insbesondere als ein trockener Roving, ein Prepregband oder dergleichen vorliegt. Allgemein können Trockenfasern, insbesondere mit einem Bindermaterial, z.B. einem polymeren Bindermaterial beschichtete Trockenfasern verwendet werden.

Bei dem Umwickeln des Kerns wird bevorzugt eine Vielzahl von Faserlagen ausgebildet. Insbesondere können zwischen 10 und 60 Faserlagen, bevorzugt zwischen 15 und 50 Faserlagen und insbesondere bevorzugt zwischen 20 und 40 Faserlagen gebildet werden. In diesen Bereichen wird eine hohe mechanische Stabilität eines Faserverbundbauteils, das aus einem auf die vorbeschriebene Weise hergestellten Faserverbundhalbzeug hergestellt wird, bei geringem Gesamtgewicht sichergestellt.

Besonders vorteilhaft kann bei dem Verfahren eine Vorschubrichtung und eine Vorschubgeschwindigkeit, mit welcher die Wickelvorrichtung entlang des Kerns bewegt wird, sowie eine Rotationsgeschwindigkeit, mit welcher der Rotor gedreht wird, derart aufeinander abgestimmt sein, dass in den Faserlagen jeweils ein vorbestimmtes Wickelmuster ausgebildet wird.

Beispielsweise kann ein unidirektionales Wickelmuster erzeugt werden. Hierzu wird die Vorschubrichtung der Wickelvorrichtung entlang des Kerns während des Umwickelns nicht umgekehrt. Alternativ können auch gekreuzte Wickelmuster erzeugt werden, bei denen sich der Faserwerkstoff innerhalb einer Faserlage überkreuzt.

Allgemein können die Vorschubrichtung, die Vorschubgeschwindigkeit und die Rotationsgeschwindigkeit auch derart aufeinander abgestimmt sein, dass in verschiedenen Faserlagen verschiedene oder gleiche Wickelmuster erzeugt werden.

Weiterhin ist es auch möglich die vorgenannten die Bewegung der Wickelvorrichtung definierenden Größen derart aufeinander abzustimmen, dass ein Wickelmuster erzeugt wird, bei dem innerhalb einer Faserlage die Orientierung des Faserwerkstoffs relativ zu dem Kern, insbesondere relativ zu einer Querschnittsmittellinie des Kerns variiert. Beispielsweise kann ein Wickelmuster erzeugt werden, bei dem in einem ersten Längs- oder Umfangsabschnitt des Kerns eine unidirektionale Wicklung vorliegt, bei der die Bänder oder Fäden des Faserwerkstoffs entlang geodätischer Pfaden entlang der Oberfläche des Kerns verlaufen, und in einem zweiten Längs- oder Umfangsabschnitt des Kerns eine unidirektionale Wicklung vorliegt, bei der die Bänder oder Fäden des Faserwerkstoffs entlang nicht-geodätischer Pfade entlang der Oberfläche des Kerns verlaufen. In diesem Zusammenhang sind natürlich auch weitere Kombinationen von Wickelpfaden, insbesondere auch für gekreuzte Wickelmuster denkbar.

Bevorzugt kann die Abstimmung der Vorschubrichtung, der Vorschubgeschwindigkeit und der Rotationsgeschwindigkeit derart erfolgen, dass das vorbestimmte Wickelmuster derart verläuft, dass zumindest einer der Faserstränge eine Orientierungen zwischen 15 Grad bis 89 Grad relativ zu einer Querschnittsmittellinie oder zu einem Krümmungsvektor des Kerns aufweist, wobei der Krümmungsvektor zwischen einem Krümmungsmittelpunkt der Querschnittslinie an einem bestimmten Punkt und dem jeweiligen Punkt der Querschnittsmittellinie verläuft.

Die Abstimmung der Vorschubrichtung, der Vorschubgeschwindigkeit und der Rotationsgeschwindigkeit ist auf einfache Weise, z.B. mittels einer Steuerungs-oder Regelungsvorrichtung möglich. Durch die damit erzielbaren Wickelmuster, die insbesondere abschnittsweise verschiedene Orientierungen der Faserbänder umfassen können, wird eine vorteilhafte einfache Anpassung des Faserverlaufs an die spezifischen mechanischen Anforderungen ermöglicht, die an ein Bauteil gestellt werden, das aus einem durch das vorbeschriebene Verfahren hergestellten Faserverbundhalbzeug hergestellt wird.

Wie bereits oben erwähnt, bildet der Kern bevorzugt eine geschlossene Form aus. Der Kern bestimmt allgemein die Gestalt des Faserverbundhalbzeugs. Die mit dem vorbeschriebenen Verfahren hergestellten Faserverbundhalbzeuge beispielsweise zu Faserverbundbauteilen weiterverarbeitet werden, die als Strukturbauteile für Luftfahrzeuge eingesetzt werden können. Bei geschlossenen Kernen können die Strukturbauteile beispielsweise als Fensterrahmen, Spante oder dergleichen in Luftfahrzeugen verwendet werden.

Erfindungsgemäß ist weiterhin ein Verfahren zur Herstellung eines Faserverbundbauteils vorgesehen, wobei das Verfahren aufweist:
- Herstellen eines Faserverbundhalbzeugs mittels Durchführung eines Verfahrens nach einer vorgenannten Ausführungsformen,
- Erzeugen einer den Faserwerkstoff umgebenden Schicht aus einem Matrix-material,
- Härten des Matrixmaterials der Harzschicht.

Die Einsatzmöglichkeiten eines auf diese Weise hergestellten Faserverbundbauteils wurden bereits oben genannt.

In Bezug auf Richtungsangaben und Achsen, insbesondere auf Richtungsangaben und Achsen, die den Verlauf von physischen Strukturen betreffen, wird hierin unter einem Verlauf einer Achse, einer Richtung oder einer Struktur "entlang" einer anderen Achse, Richtung oder Struktur verstanden, dass diese, insbesondere die sich in einer jeweiligen Stelle der Strukturen ergebenden Tangenten jeweils in einem Winkel von kleiner oder gleich 45 Grad, bevorzugt kleiner oder gleich 30 Grad und insbesondere bevorzugt parallel zueinander verlaufen.

In Bezug auf Richtungsangaben und Achsen, insbesondere auf Richtungsangaben und Achsen, die den Verlauf von physischen Strukturen betreffen, wird hierin unter einem Verlauf einer Achse, einer Richtung oder einer Struktur "quer" zu einer anderen Achse, Richtung oder Struktur verstanden, dass diese, insbesondere die sich in einer jeweiligen Stelle der Strukturen ergebenden Tangenten jeweils in einem Winkel von größer oder gleich 45 Grad, bevorzugt größer oder gleich 60 Grad und insbesondere bevorzugt senkrecht zueinander verlaufen.

Hierin wird unter einem "Faserwerkstoff" oder einem "Fasermaterial" allgemein ein Werkstoff verstanden, der aus einer Vielzahl von fadenförmigen Verstärkungsfasern, wie beispielsweise Kohlenstoff-, Glas-, Keramik-, Aramid-, Bor-, Mineral-, Natur- oder Kunststofffasern oder Mischungen aus diesen gebildet ist. Der Faserwerkstoff kann insbesondere auch mit einem Harz- oder Matrixmaterial wie z.B. einem duroplastischen, thermoplastischen, elastomeren Harz oder allgemein ein Kunststoffharz oder dergleichen imprägniert sein.

In Bezug auf den Faserwerkstoff wird unter "band- oder fadenförmig" insbesondere verstanden, dass mehrere einzelnen Faserfäden des Faserwerkstoffs zu einem Strang, einem Streifen oder einem Roving zusammengefasst sein können, in dem die einzelnen Fasern insbesondere parallel zueinander, entlang einander, einander umwickelnd oder verflochten vorliegen, oder dass mehrere Faserfäden zu einem Band oder Streifen verwebt oder verbunden sind. Ein Faserband kann insbesondere eine eine konstante Breite und/oder ein konstantes Flächengewicht aufweisen.

Unter einem "unidirektionalen Wickelmuster", einer "unidirektionalen Wicklung", oder einem "unidirektionalen Verlauf" des Faserwerkstoffs wird hierin allgemein verstanden, dass die eine Faserlage ausbildenden Stränge, Bänder, Streifen oder Rovinge sich innerhalb dieser Faserlage nicht kreuzen und/oder keine Ondulationen bilden.

Im Folgenden wird die Erfindung unter Bezugnahme auf die Figuren der Zeichnungen erläutert. Von den Figuren zeigen:
- Figur 1: eine perspektivische Ansicht eines Werkzeugsystems gemäß einem bevorzugten Ausführungsbeispiel der vorliegenden Erfindung;
- Figur 2: eine schematische Darstellung einer Bewegung einer Wickelvorrichtung des Werkzeugsystems entlang einer Bewegungsbahn;
- Figur 3: ein Beispiel einer Wickelvorrichtung gemäß einem Ausführungsbeispiel des Werkzeugsystems nach der vorliegenden Erfindung;
- Figur 4: eine vereinfachte Schnittansicht der in Figur 3 gezeigten Wickelvorrichtung, die sich bei einem Schnitt entlang der in Figur 3 eingezeichneten Linie B-B ergibt;
- Figur 5: ein weiteres Ausführungsbeispiel einer Wickelvorrichtung gemäß einem Ausführungsbeispiel des Werkzeugsystems nach der vorliegenden Erfindung;
- Figur 6: ein erstes Beispiel einer Wickelvorrichtungs-Positioniereinrichtung des Werkzeugsystems;
- Figur 7: ein zweites Beispiel einer Wickelvorrichtungs-Positioniereinrichtung des Werkzeugsystems;
- Figur 8: eine Draufsicht auf eine beispielartig gezeigte Halteanordnung des Werkzeugsystems;
- Figur 9: eine abgebrochene Schnittansicht der in Figur 8 gezeigten Halteanordnung, die sich bei einem Schnitt entlang der in Figur 8 eingezeichneten Linie C-C ergibt, mit einer schematischen Darstellung eines Beispiels einer Haltevorrichtung;
- Figur 10: eine schematische Darstellung eines Umwickelns eines Kerns mit einem Fasermaterial gemäß einem Ausführungsbeispiel des Verfahrens zur Herstellung eines Faserverbundhalbzeugs nach der vorliegenden Erfindung;
- Figur 11: eine schematische Darstellung eines Umwickelns eines Kerns mit einem Fasermaterial gemäß einem weiteren Ausführungsbeispiel des Verfahrens zur Herstellung eines Faserverbundhalbzeugs nach der vorliegenden Erfindung;
- Figur 12: eine Draufsicht auf ein Beispiel eines Faserverbundhalbzeugs, das mittels eines Werkzeugsystems und durch ein Verfahren gemäß der vorliegenden Erfindung herstellbar ist und das einen Kern mit einer offenen Form aufweist;
- Figur 13: eine Draufsicht auf ein weiteres Beispiel eines Faserverbundhalbzeugs, das mittels eines Werkzeugsystems und durch ein Verfahren gemäß der vorliegenden Erfindung herstellbar ist und das einen Kern mit einer offenen Form aufweist;
- Figur 14: eine Draufsicht auf ein Beispiel eines Faserverbundhalbzeugs, das mittels eines Werkzeugsystems und durch ein Verfahren gemäß der vorliegenden Erfindung herstellbar ist und das einen Kern mit einer geschlossenen Form aufweist;
- Figur 15: eine Draufsicht auf ein weiteres Beispiel eines Faserverbundhalbzeugs, das mittels eines Werkzeugsystems und durch ein Verfahren gemäß der vorliegenden Erfindung herstellbar ist und das einen Kern mit einer geschlossenen Form aufweist;
- Figur 16: eine Draufsicht auf ein weiteres Beispiel eines Faserverbundhalbzeugs, das mittels eines Werkzeugsystems und durch ein Verfahren gemäß der vorliegenden Erfindung herstellbar ist und das einen Kern mit einer geschlossenen Form aufweist;
- Figur 17: eine Draufsicht auf ein weiteres Beispiel eines Faserverbundhalbzeugs, das mittels eines Werkzeugsystems und durch ein Verfahren gemäß der vorliegenden Erfindung herstellbar ist und das einen Kern mit einer geschlossenen Form aufweist;
- Figur 18: eine abgebrochene perspektivische Ansicht eines Abschnitts eines Kerns, der gemäß einem Ausführungsbeispiel des Verfahrens zur Herstellung eines Faserverbundhalbzeugs nach der vorliegenden Erfindung mit einem Faserwerkstoff umwickelt ist, wobei der Faserwerkstoff gemäß einem beispielhaft gezeigten vorbestimmten Wickelmuster verläuft;
- Figur 19: eine abgebrochene perspektivische Ansicht eines Abschnitt eines Kerns, der gemäß einem Ausführungsbeispiel des Verfahrens zur Herstellung eines Faserverbundhalbzeugs nach der vorliegenden Erfindung mit einem Faserwerkstoff umwickelt ist, wobei der Faserwerkstoff gemäß einem beispielhaft gezeigten vorbestimmten Wickelmuster verläuft;
- Figur 20: eine abgebrochene perspektivische Ansicht eines Abschnitts eines Kerns, der gemäß einem Ausführungsbeispiel des Verfahrens zur Herstellung eines Faserverbundhalbzeugs nach der vorliegenden Erfindung mit einem Faserwerkstoff umwickelt ist, wobei der Faserwerkstoff gemäß einem beispielhaft gezeigten vorbestimmten Wickelmuster verläuft;
- Figur 21: eine schematische abgebrochene Schnittansicht eines gemäß eines Ausführungsbeispiels eines Verfahrens nach der vorliegenden Erfindung hergestellten Faserverbundbauteils.

In den Figuren bezeichnen dieselben Bezugszeichen gleiche oder funktionsgleiche Komponenten, soweit nichts Gegenteiliges angegeben ist.

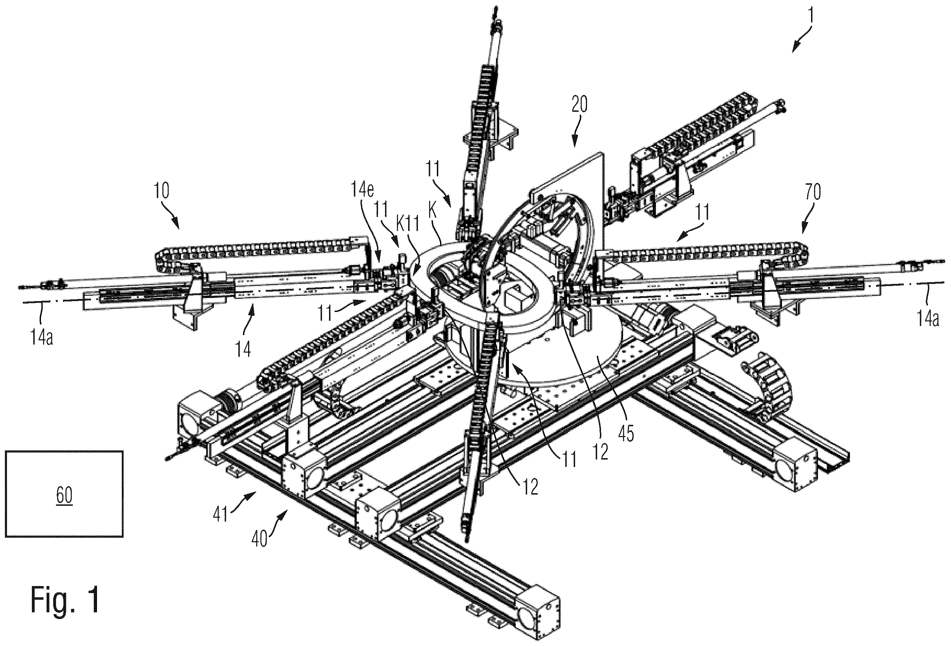

Figur 1 zeigt ein Ausführungsbeispiel eines Werkzeugsystems 1 zur Herstellung eines Faserverbundhalbzeugs H gemäß der vorliegenden Erfindung. Das Werkzeugsystem 1 weist eine Halteanordnung 10 mit zumindest zwei Haltevorrichtungen 11 zum Halten eines mit einem band- oder fadenförmigen Faserwerkstoff F zu umwickelnden Kerns K und eine Wickelvorrichtung 20 auf.

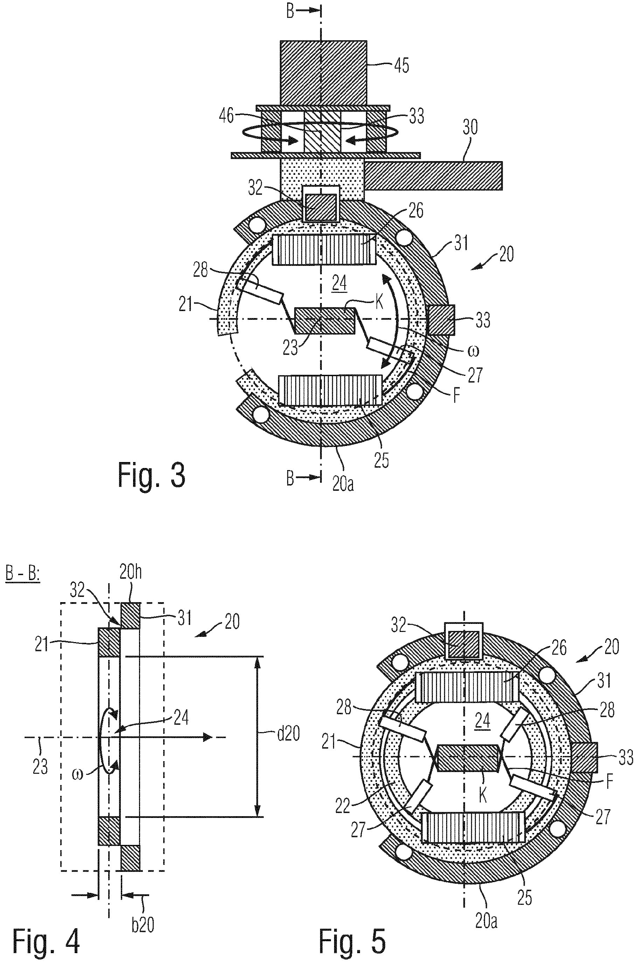

Figur 3 zeigt beispielartig einen möglichen Aufbaut der Wickelvorrichtung 20. Die Wickelvorrichtung weist insbesondere zumindest einen um eine Rotationsachse 23 drehbaren Rotor 21, zumindest einen relativ zu dem Rotor 21, 22 ortsfest angeordneten Materialträger 25, 26 zum Bereitstellen des Faserwerkstoffs F und einem dem jeweiligen Materialträger 25, 26 zugeordneten von dem Rotor 21, 22 zu der Rotationsachse 23 hin abstehenden Führungsbügel 27, 28 zum Führen des Faserwerkstoffs F auf.

Wie in Figur 5 gezeigt ist, kann die Wickelvorrichtung 20 zumindest einen weiteren drehbaren Rotor 22 aufweisen. Die weiteren Rotoren 22 sind jeweils konzentrisch zueinander und konzentrisch zu dem Rotor 21 angeordnet. Es kann vorgesehen sein, dass die Rotoren 21, 22 entlang der Rotationsachse 23 versetzt angeordnet sind.

Der zumindest eine Rotor 21, 22 kann, wie in Figur 3 gezeigt, kreissegmentförmig, also als ein Kreisring mit einer Unterbrechung, ausgebildet sein. Eine derartige Gestaltung bietet den Vorteil, dass der Kern durch die Unterbrechung hindurch in einen von dem Rotor 21, 22 umgrenzten Wickelraum 24 eingeführt werden kann.

Alternativ zu einer kreissegmentförmigen Gestaltung, kann der Rotor 21, 22 auch, wie in Figur 5 gezeigt ist, als ein teilbarer Kreisring ausgeführt sein. Hierbei ist der Rotor aus mehreren Umfangsabschnitten zusammengesetzt, die jeweils lösbar miteinander verbunden sind, beispielsweise durch eine Rastverbindung, ein Klemmverbindung, eine formschlüssige Verbindung oder dergleichen. Bei dieser Gestaltung können über den gesamten Umfang Materialträger 25, 26 angeordnet werden, wodurch die mittels der Wickelvorrichtung 20 ablegbare Menge Fasermaterial pro Zeit erhöht wird.

Bei der Variante der Wickelvorrichtung mit mehreren Rotoren 21, 22 können die Rotoren 21, 22 jeweils gleich, z.B. kreissegmentförmig oder als teilbarer Kreisring, oder verschieden gestaltet sein. Bei dem in Figur 5 gezeigten Ausführungsbeispiel sind sowohl der Rotor 21 als auch der Rotor 22 als teilbarer Kreisring ausgeführt.

Die Materialträger 25, 26 können vorteilhaft als Spulen oder Rollen realisiert sein, auf denen das Fasermaterial F, z.B. in Form von Rovingen oder vorimprägnierten Faserbändern, sogenannten Prepregs, aufgewickelt ist. Die Materialträger 25, 26 sind gegenüber dem jeweiligen Rotor 21, 22 jeweils ortsfest angeordnet und bevorzugt mit diesem verbunden. Bei einer Rotation des Rotors 21, 22 um die Drehachse 23 drehen sich die Materialträger 25, 26 somit ebenfalls um die Drehachse 23. Es kann eine Vielzahl von Materialträgern 25, 26 je Rotor 21, 22 vorgesehen sein, beispielsweise bis zu mehr als 100 Stück je Rotor 21, 22.

Jedem Materialträger 25, 26 eines Rotors 21, 22 ist jeweils ein Führungsbügel 27, 28 zugeordnet. Der Führungsbügel 27, 28 sorgt dafür, dass der Faserwerkstoff F an einer definierten Umfangsposition des Rotors 21, 22 und an einer definierten radialen Position des Wickelraums 24 bereitgestellt wird. Dadurch wird das Fasermaterial F mittels des Führungsbügels 27, 28 relativ zu dem Kern K positioniert.

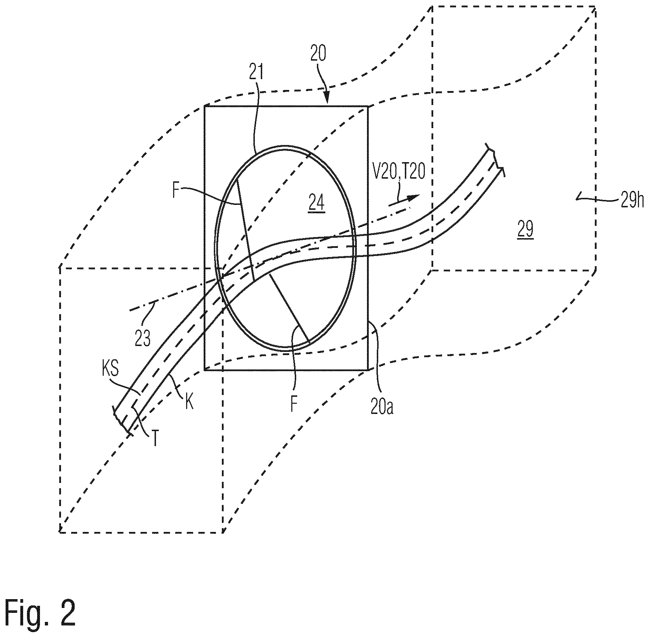

Der zumindest eine Rotor 21, 22 umgrenzt zumindest abschnittsweise einen Wickelraum 24 zur Aufnahme des Kerns K. Der Wickelraum 24 erstreckt sich insbesondere in radialer Richtung um die Rotationsachse 23 und über eine Breite b20 des Rotors 21, 22 entlang der Rotationsachse 23, wie dies beispielartig in Figur 4 gezeigt ist. Zur Herstellung des Faserverbundhalbzeugs H ist der Kern K, wie z.B. in den Figuren 2, 3 und 4 gezeigt, mit einem Längsabschnitt in dem Wickelraum 24 gelegen.

Die Wickelvorrichtung 20 ist translatorisch entlang einer Bewegungsbahn T derart bewegbar, dass eine Bewegung der Wickelvorrichtung 20 entlang der Bewegungsbahn T zumindest eine Richtungskomponente aufweist, die mit der Rotationsachse 23 des Rotors 21, 22 übereinstimmt.

Figur 2 zeigt beispielartig eine translatorische Bewegung der Wickelvorrichtung 20 entlang einer vorbestimmten Bewegungsbahn T mit einer Vorschubgeschwindigkeit V20 und einer Vorschubrichtung T20. Die Bewegungsbahn T kann beispielsweise den Verlauf einer Querschnittsmittellinie KS des Kerns K gegeben sein. Hierbei kann als Bedingung für die Positionierung der Wickelvorrichtung 20 relativ zu dem Kern K vorgesehen sein, dass die Rotationsachse 23 innerhalb des Wickelraums 24 entlang der Querschnittsmittellinie KS des Kerns K verläuft.

Wie in Figur 2 gezeigt ist, definiert eine Außenkontur 20a der Wickelvorrichtung 20 während deren Bewegung entlang der Bewegungsbahn T eine Hüllfläche 29h. Die Außenkontur 20a ist in Figur 2 lediglich schematisch dargestellt und ist allgemein an jeder Stelle der Bewegungsbahn T durch die Umfangslinie einer Projektionsfläche der Wickelvorrichtung 20 definiert, wobei sich die Projektionsfläche durch Projektion der Wickelvorrichtung 20 auf eine sich an der jeweiligen Stelle der Bewegungsbahn T senkrecht zu dieser erstreckenden Ebene ergibt. Die Hüllfläche 29h definiert einen Arbeitsraum 29 der Wickelvorrichtung 20, wie schematisch in Figur 2 gezeigt ist.

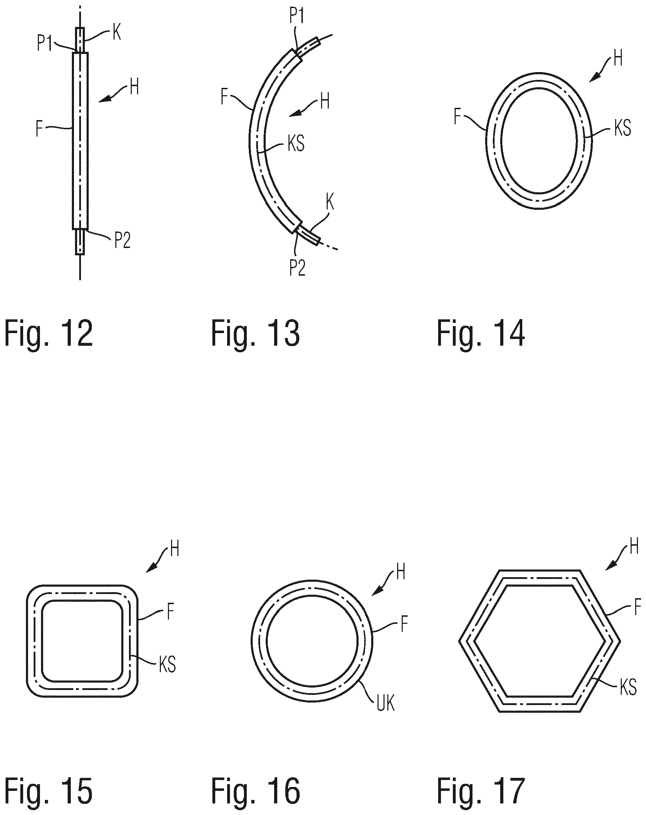

Die Haltevorrichtungen 11 der Halteanordnung 10 zum Halten des Kerns K sind mit der Wickelvorrichtung 20 jeweils derart gekoppelt sind, dass diese während der translatorischen Bewegung der Wickelvorrichtung 20 jeweils aus dem Arbeitsraum 29 der Wickelvorrichtung 20 heraus bewegbar sind. Insbesondere ist jede einzelne Haltevorrichtung 11 von dem Kern K, den diese hält, lösbar und kann aus dem Arbeitsraum 29 der Wickelvorrichtung 20 herausbewegt werden. Dadurch kann die Wickelvorrichtung in einer durchgehenden Richtung über die gesamte Erstreckung des Kerns K bewegt werden. Dies ist insbesondere bei Kernen K mit geschlossener Form und komplexer Geometrie, wie dies beispielartig in den Figuren 14 bis 17 gezeigt ist, oder allgemein bei Kernen K mit gekrümmter Querschnittslinie KS vorteilhaft. Beim Umwickeln mit Fasermaterial F kann der Kern K fest in der Halteanordnung 10 eingespannt oder fixiert werden und die Wickelvorrichtung 20 entlang dem Kern K bewegt werden. Während die Wickelvorrichtung 20 einen Haltebereich entlang der Querschnittslinie KS des Kerns K, in dem eine Haltevorrichtung 11 den Kern angreift umwickelt, kann die Haltevorrichtung 11 während des Umwickeln dieses Bereichs aus dem Arbeitsraum 29 der Wickelvorrichtung 20 herausbewegt werden.

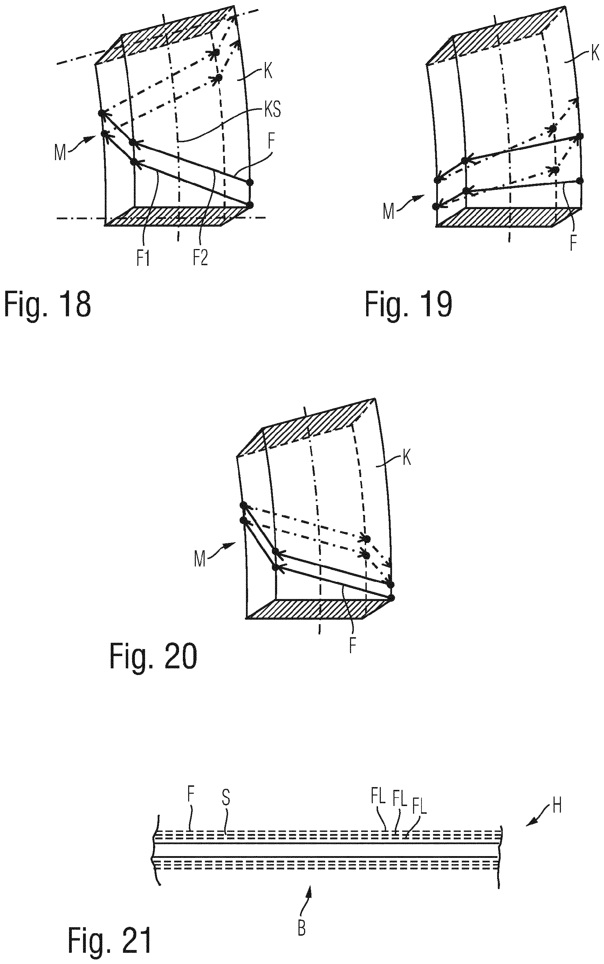

Auf diese Weise ist es möglich, den Kern K zu umwickeln, ohne diesen selbst zu rotieren. Dies resultiert in einem einfachen Aufbau des Werkzeugsystems 1. Gleichzeitig kann auf dadurch der Kern mit einer Vielzahl von Faserlagen FL umwickelt werden, die jeweils ein unidirektionales Wickelmuster M aufweisen, wie in den Figuren 18 bis 21 gezeigt, worauf im Folgenden noch genauer eingegangen wird.

Wie in den Figuren 3 bis 5 weiterhin gezeigt ist, kann die Wickelvorrichtung 20 weiterhin eine Antriebsvorrichtung 30 aufweisen, die den Rotor 21, 22 derart antreibt, dass dieser mit einer Dreh- oder Rotationsgeschwindigkeit ω um die Rotationsachse 29 rotiert. Die Drehrichtung ist vorteilhafterweise umkehrbar. Die Antriebsvorrichtung 30 kann als ein Elektromotor, ein Pneumatikmotor, ein Hydraulikmotor oder dergleichen ausgebildet sein.

Weiterhin kann die Wickelvorrichtung 20 einen Stator 31 aufweisen, an welchem der Rotor 21, 22 geführt ist. Beispielsweise kann vorgesehen sein, dass der Rotor 21 entlang der Rotationsachse 23 versetzt zu dem Stator 31 angeordnet und an einem axialen Abschnitt 32 des Stators 31 geführt ist. Dies hat den Vorteil, dass der Innendurchmesser d20 des Rotors 21 groß gewählt werden kann. Auf diese Weise wird einerseits der Umfang des Rotors 21 vergrößert, wodurch mehr Materialträger 25, 26 an diesem anordenbar sind, und weiterhin wird der Wickelraum 24 vergrößert, wodurch Kerne K mit größerer Querschnittsfläche und stärkerer Krümmung verarbeitet werden können. Der Rotor 21 kann jedoch auch an einer Innenumfangsfläche des Stators 31 geführt sein. Der Stator 31 kann insbesondere kreissegmentförmig gestaltet sein.

Bevorzugt kann an der Wickelvorrichtung 20 eine Induktionsspule 32 vorgesehen sein, mittels derer auf dem Rotor 21 sitzende Komponenten, wie z.B. die Materialträger 25, 26 mit elektrischer Energie versorgt werden können. Damit beispielsweise kann eine optional vorgesehene Heizvorrichtung (nicht gezeigt) zum Erwärmen des Faserwerkstoffs F betrieben werden. Mit der Heizvorrichtung ist es möglich, eine optional an dem Faserwerkstoff F vorgesehene Harzimprägnierung bereits während des Umwickelns zu härten und/oder zu erstarren. Dadurch wird die Haftung des Fasermaterials am Kern K verbessert, wodurch sichergestellt wird, dass das Fasermaterial in der gewünschten Position relativ zu dem Kern verbleibt. Dies erhöht die Qualität des Faserverbundhalbzeugs. Die Heizvorrichtung kann auch getrennt von der Wickelvorrichtung 20 vorgesehen sein und zusammen mit dieser entlang des Kerns K geführt werden.

Wie in den Figuren 3 und 5 außerdem gezeigt ist, kann die Wickelvorrichtung 20 einen Abstandssensor 33 zum Erfassen einer Position der Wickelvorrichtung 20 relativ zu dem Kern K aufweisen. Der Abstandssensor 33 kann beispielsweise durch einen Infrarotsensor, einen Ultraschallsensor oder dergleichen realisiert sein und ist bevorzugt an dem Stator 31 angeordnet.

Das Werkzeugsystem 1 kann insbesondere eine Wickelvorrichtungs-Positioniereinrichtung 40 zum Bewegen der der Wickelvorrichtung 20 entlang der Bewegungsbahn T aufweisen.

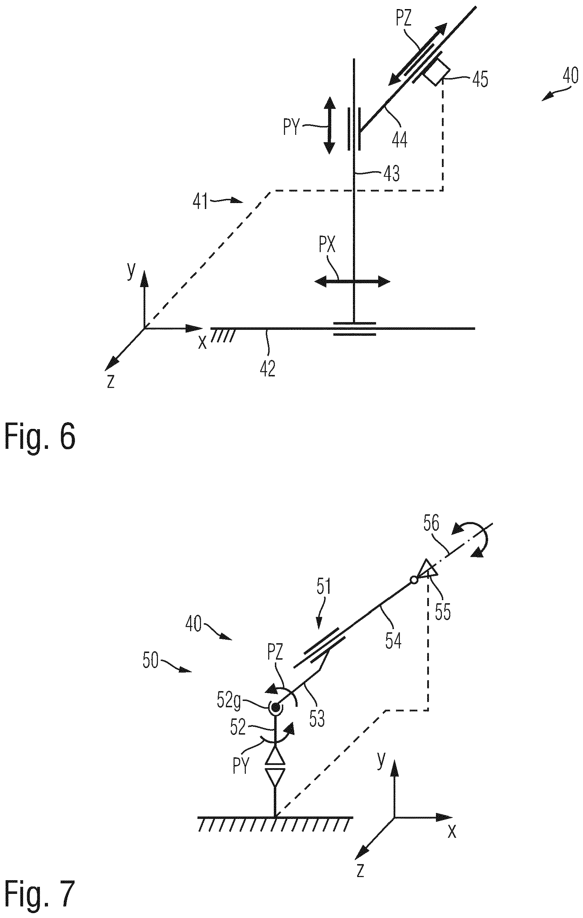

Figur 6 zeigt beispielartig die kinematischen Zusammenhänge einer als Führungsanordnung 41 realisierten Wickelvorrichtungs-Positioniereinrichtung 40. Bei dem in Figur 1 gezeigten Ausführungsbeispiel des Werkzeugsystems 1 ist die Wickelvorrichtungs-Positioniereinrichtung 40 als Führungsanordnung 41 realisiert.

Wie in Figur 6 gezeigt, weist die Führungsanordnung 41 zumindest eine in einer ersten Raumrichtung X verlaufende erste Führungsschiene 42 auf. An dieser ist eine in einer zweiten Raumrichtung Y verlaufende zweite Führungsschiene 43 geführt. Insbesondere ist die zweite Führungsschiene 43 an der ersten Führungsschiene 42 derart geführt, dass die zweite Führungsschiene 43 translatorisch in der ersten Raumrichtung X bewegbar ist, wie dies in Figur 6 durch den Pfeil PX angedeutet ist.

An der zweiten Führungsschiene 43 ist weiterhin eine dritte Führungsschiene 44 geführt, die in einer dritten Raumrichtung Z verläuft. Insbesondere ist die dritte Führungsschiene 44 an der zweiten Führungsschiene 43 derart geführt, dass die dritte Führungsschiene 44 translatorisch in der zweiten Raumrichtung Y bewegbar ist, wie dies in Figur 6 durch den Pfeil PY angedeutet ist.

An der dritten Führungsschiene 44 ist eine mit einer Halterung 45 geführt, die mit der Wickelvorrichtung 20 verbunden ist. Die Halterung 45 ist insbesondere derart an der dritten Führungsschiene 44 geführt, dass die Halterung 45 in der dritten Raumrichtung Z translatorisch bewegbar ist, wie in Figur 6 durch den Pfeil PZ angedeutet ist.

An den Führungsschienen 42, 43, 44 können zur Führung der jeweils anderen Schiene 42, 43, 44 bzw. der Halterung 45 jeweils Führungsbahnen, z.B. in Form von Führungsnuten, Führungsansätzen oder dergleichen ausgebildet sein, in welche ein Führungsabschnitt der jeweils geführten Schiene 42, 43, 44 bzw. der Halterung 45 eingreift.

Alternativ zu einer Führungsanordnung 41 kann die Wickelvorrichtungs-Positioniereinrichtung 40 durch einen Roboter 50 gebildet sein. Der Roboter 50 weist hierzu eine in den drei Raumrichtungen X, Y, Z bewegbare Armkinematik 51 auf. Figur 7 zeigt beispielartig die kinematischen Zusammenhänge einer möglichen Armkinematik 51. Ein in einer Raumrichtung Y verlaufender erster Arm 52 ist um seine Längsachse drehbar gelagert, wie in Figur 7 durch den Pfeil PY angedeutet. Ein durch ein Gelenk 52g mit dem ersten Arm 52 verbundener zweiter Arm 53 ist um eine senkrecht zu der Längsachse des ersten Arms 52 verlaufende Schwenkachse schwenkbar, wie in Figur 7 durch den Pfeil PZ angedeutet ist. An dem zweiten Arm 53 ist weiterhin ein dritter Arm 54 translatorisch geführt, wobei an einem Endabschnitt des dritten Arms 54 eine Halterung 55 angeordnet ist, die mit der Wickelvorrichtung 20 verbunden ist.

Die Halterung 45, 55 verbindet die Wickelvorrichtung 20 jeweils derart mit der der Wickelvorrichtungs-Positioniereinrichtung 40, dass Wickelvorrichtung 20 um eine Halterungsachse 46, 56 drehbar ist. Beispielsweise kann die Wickelvorrichtung 20 mit einen Bolzen 33 aufweisen, der an der Halterung 45 um die Halterungsachse 46 drehbar aufgenommen ist, wie dies in Figur 3 beispielartig gezeigt ist. Alternativ hierzu kann vorgesehen sein, dass die Wickelvorrichtung 20 drehfest mit der Halterung 45, 55 verbunden ist und die Halterung 45, 55 um eine Drehachse 46, 56 drehbar mit der dritten Führungsschiene 44 bzw. dem dritten Arm 54 verbunden ist.

Wie bereits beschrieben, weist das Werkzeugsystem eine Halteanordnung 10 mit zumindest zwei Haltevorrichtungen 11 auf. Die Haltevorrichtungen 11 können beispielsweise, wie in Figur 1 gezeigt, als linear verschiebbare Klemmteile 12 ausgeführt sein. Bevorzugt sind diese an einem Endabschnitt 14e eines translatorisch verschiebbaren Trägers 14 angeordnet, wie dies in Figur 1 gezeigt ist. Besonders vorteilhaft können jeweils zwei Träger 14 einander gegenüber derart angeordnet sein, dass deren Trägerlängsachsen 14a entlang zueinander verlaufen und die Endabschnitt 14a, an denen die Klemmteile 12 oder Klemmbacken angeordnet sind, einander zugewandt gelegen sind. Auf diese Weise kann ein Kern K jeweils zwischen zwei gegenüberliegenden Klemmteilen 12 eingeklemmt und dadurch gehalten werden.

Zum translatorischen Bewegen der Träger 14 können jeweils Antriebsvorrichtungen 70, z.B. in Form von Linearmotoren, Kettentrieben, Hydraulikantrieben oder dergleichen vorgesehen sein. Durch das translatorische Bewegen der Träger 14 sind diese weiterhin aus dem Arbeitsraum 29 der Wickelvorrichtung 20 herausbewegbar.

Auf diese Weise kann eine modulare Halteanordnung aufgebaut werden, die auf einfache Weise an die Größe und die Geometrie des Kerns anpassbar ist.

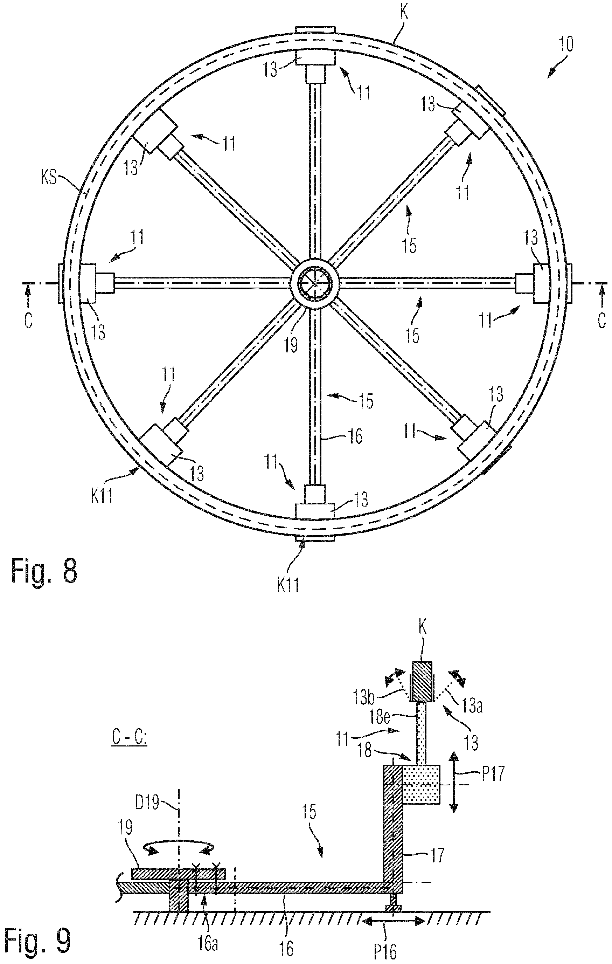

Die zumindest zwei Haltevorrichtungen 11 können auch als öffnen- und schließbare Klammern 13 ausgebildet sein, wie in den Figuren 8 und 9 gezeigt ist. Die Klammern 13 können beispielsweise an den Endabschnitten 14e der in Figur 1 gezeigten Träger 14 angeordnet sein. Weiterhin können die Klammern 13 an gewinkelten Haltearmen 15 einer in den Figuren 8 und 9 beispielartig gezeigten Halteanordnung 10 angeordnet sein.

Die in Figur 8 gezeigte Halteanordnung 10 weist mehrere gewinkelte Haltearme 15 auf. Jeder der Haltearme 15 weist insbesondere einen ersten Träger 16, einen an diesem geführten und quer zu diesem verlaufenden zweiten Träger 17 und ein an dem zweiten Träger 17 geführtes Stützteil 18 auf, an welcher eine jeweilige Klammer 13 angeordnet ist.

Die ersten Träger 16 können mit einem ersten Endabschnitt 16a an einem um eine Drehachse D19 drehbaren Ring 19 befestigt sein, wie in Figur 9 gezeigt ist. Alternativ hierzu kann jeder Träger 16 an dem ersten Endabschnitt 16a drehbar gelagert sein.

Die zweiten Träger 17 sind jeweils derart an dem zugehörigen ersten Träger 16 geführt, dass diese entlang des ersten Trägers 16 translatorisch verschiebbar sind, wie dies durch den Pfeil P16 in Figur 9 angedeutet ist.

Die Stützteile 18 sind jeweils derart an dem zugehörigen zweiten Träger 17 geführt, dass diese entlang des zweiten Trägers 17 translatorisch verschiebbar sind, wie dies durch den Pfeil P17 in Figur 9 angedeutet ist.

Durch diese Verstellungsmöglichkeiten der Träger 16, 17 und des Stützteils 18 zueinander ist die Halteanordnung 11 flexibel an komplex geformte Kerne K anpassbar.

An einem Endabschnitt 18e des jeweiligen Stützteils 18 ist die als Klammer 13 ausgeführte Haltevorrichtung 11 angeordnet. Die Klammer 13 kann bevorzugt zwei schwenkbare Klemmbacken 13a, 13b aufweisen, zwischen denen der Kern K einklemmbar ist. In Figur 9 sind die Klemmbacken 13a, 13b als durchgehende Linien in einer Stellung gezeigt, in der diese den Kern K halten, und als gestrichelte Linien in einer verschwenkten Stellung, in der diese den Kern K freigeben.

Wie in Figur 8 gezeigt ist, kann die Halteanordnung 11 derart realisiert sein, dass die ersten Träger 16 der gewinkelten Haltearme 15 sich jeweils radial von dem Ring 19 aus erstrecken.

Somit kann eine modulare Halteanordnung aufgebaut werden, die auf einfache Weise an die Größe und die Geometrie des Kerns anpassbar ist.

Wie in Figur 1 schematisch gezeigt, kann das Werkzeugsystem 1 eine Steuerungsvorrichtung 60 aufweisen, mittels derer die Rotationsgeschwindigkeit ω des Rotors 21, 22, die Vorschubrichtung T20 und die Vorschubgeschwindigkeit V20 der Wickelvorrichtung 20 entlang der Bewegungsbahn T sowie eine jeweilige Position der Haltevorrichtungen 11 einstellbar sind. Die Steuerungsvorrichtung 50 kann insbesondere Funktionen zum Erzeugen von Steuerbefehls aufweisen, aufgrund derer jeweilige Stellmotoren, z.B. der Antriebsmotor 30 der Wickelvorrichtung 20 oder die Antriebsvorrichtungen 70 der Halteanordnung 10 betätigt werden.

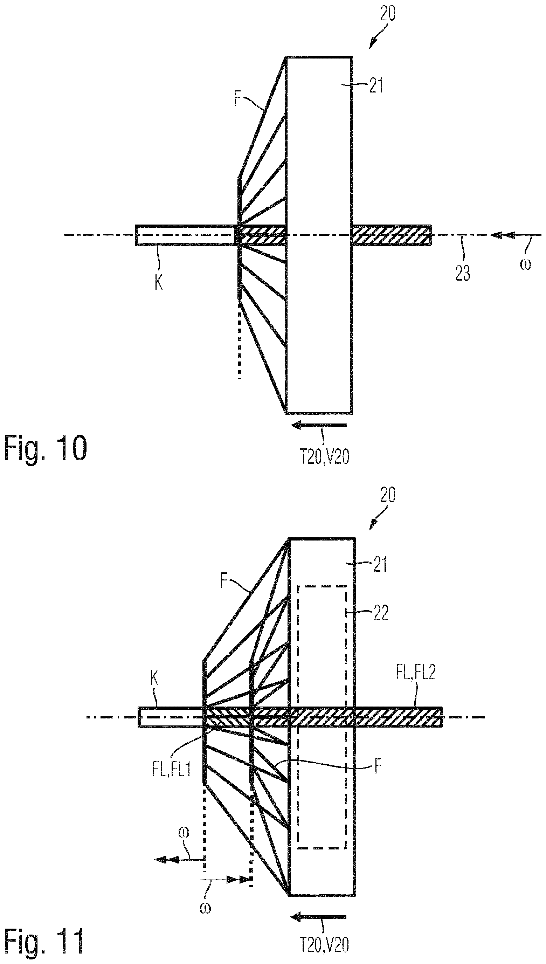

Figur 10 zeigt beispielartig einen Schritt eines Verfahrens zur Herstellung des Faserverbundhalbzeugs H gemäß der vorliegenden Erfindung. Bei dem in Figur 10 gezeigten Schritt erfolgt ein Umwickeln des durch eine Halteanordnung 10 gehaltenen Kerns K mit einem band- oder fadenförmigen Faserwerkstoff F. Insbesondere ist der Kern K durch zumindest zwei Haltevorrichtungen 11 der Halteanordnung 10 gehalten. Die Halteanordnung 10 kann auf eine der vorbeschriebenen Weisen ausgebildet sein.

Das Umwickeln des Kerns K erfolgt durch translatorisches Bewegen einer Wickelvorrichtung 20 entlang des Kerns K. Die Wickelvorrichtung 20 kann insbesondere wie oben beschrieben ausgebildet sein. In dem durch den Rotor 21, 22 definierten Wickelraum 24 ist der Kern K angeordnet. Der Rotor 21 dreht sich mit einer Rotationsgeschwindigkeit ω um die Rotationsachse 23 und wird mit einer Vorschubgeschwindigkeit V20 in einer Vorschubrichtung T20 entlang dem Kern K bewegt. Von den jeweiligen Materialträgern 25, 26 wird das Fasermaterial F abgezogen und über die Führungsbügel 27, 28 zu dem Kern K geführt.

Das translatorische Bewegen der Wickelvorrichtung 20 erfolgt derart, dass zumindest eine Richtungskomponente der Bewegung der Wickelvorrichtung 20 mit der Rotationsachse 23 übereinstimmt.

Während des Umwickelns erfolgt bei dem Verfahren weiterhin ein Herausbewegen jeweils einer der Haltevorrichtungen 11 aus dem Arbeitsraum 29 der Wickelvorrichtung 20. Die Haltevorrichtung 11 wird jeweils während des Umwickelns eines Haltebereichs K11 des Kerns K, an welchem dieser von der jeweiligen Haltevorrichtung 11 gehalten wird.

Als Kerne K können insbesondere Kerne K mit einer gekrümmt oder gewinkelt verlaufenden Querschnittsmittellinie KS verwendet werden, wie beispielartig in den Figuren 13 bis 17. Das Verfahren ist jedoch auch bei Kernen K mit einer gerade Verlaufenden Querschnittsmittellinie KS anwendbar, wie in Figur 12 gezeigt.

Besonders vorteilhaft ist das Verfahren für geschlossene oder rahmenförmige Kerne K, wie in den Figuren 14 bis 17 gezeigt, anwendbar. Die Kerne können beispielsweise eine elliptische, siehe Figur 14, eine rechteckeförmige, siehe Figur 15, eine kreisförmige, siehe Figur 16, oder eine polygonale Gestalt, siehe Figur 17, aufweisen.

Da eine Herausbewegen der Haltevorrichtungen 11 aus dem Arbeitsraum 29 der Wickelvorrichtung 20 während des Umwickelns des Haltebereichs K11 des Kerns erfolgt, können auch geschlossene Kerne K mit einem Faserwerkstoff F auf einfache Weise umwickelt werden.

Der band- oder fadenförmige Faserwerkstoff F kann beispielsweise als ein Roving, also als ein Bündel oder Strang aus bevorzugt parallel angeordneten Filamenten oder Endlosfasern vorliegen. Es können weiterhin auch mit einem Matrixmaterial vorimprägnierte Faser- oder Fasergeflechtbänder verwendet werden.

Bei dem erfindungsgemäßen Verfahren zur Herstellung des Faserverbundhalbzeugs H wird beim Umwickeln des Kerns K bevorzugt eine Vielzahl von Faserlagen FL ausgebildet. Dies kann bei geschossenen Kernen K beispielsweise dadurch realisiert werden, dass die Wickelvorrichtung 20 mit rotierenden Rotor 21, 22 mehrmals um den gesamten Umfang UK des Kerns K bewegt wird. Bei offenen Kernen K kann die Ausbildung mehrerer Faserlagen FL dadurch realisiert werden, dass die Vorschubrichtung T20 der Wickelvorrichtung 20 jeweils an vorbestimmten Umkehrpunkten P1, P2 umgekehrt wird.

Eine weitere besonders vorteilhafte Möglichkeit zur Erzeugung mehrerer Faserlagen FL ist in Figur 11 gezeigt. Dabei wird eine Wickelvorrichtung 20 entlang des Kerns K bewegt, die einen ersten Rotor 21, der eine erste an dem Kern K anliegende Faserlage FL1 an dem Kern K ablegt, und einen zweiten Rotor 22 aufweist, der eine an der ersten Faseralge FL1 anliegende zweite Faserlage FL2 an dem Kern K ablegt. Wie in beispielartig Figur 11 gezeigt, können die Rotoren 20, 21 Rotationsgeschwindigkeiten ω21, ω22 mit verschiedenen Drehrichtungen und Geschwindigkeitsbeträgen aufweisen

Es kann allgemein eine Vielzahl von Faserlagen FL erzeugt werden, beispielsweise kann die Anzahl der Faserlagen im Bereich zwischen 10 und 60, bevorzugt in einem Bereich zwischen 15 und 50 und insbesondere bevorzugt in einem Bereich zwischen 20 und 40 liegen.

Bei dem Verfahren zur Herstellung des Faserverbundbauteils können allgemein die Vorschubrichtung T20, die Vorschubgeschwindigkeit V20, mit welcher die Wickelvorrichtung 20 entlang des Kerns K bewegt wird, sowie die Rotationsgeschwindigkeit ω, mit welcher der Rotor 21, 22 gedreht wird, derart aufeinander abgestimmt sein, dass in den Faserlagen FLjeweils ein unidirektionales Wickelmuster M ausgebildet wird. Vorschubrichtung T20, die Vorschubgeschwindigkeit V20 und Rotationsgeschwindigkeit ω können allgemein derart aufeinander abgestimmt werden, dass entlang des Kerns K abschnittsweise verschiedene Wickelmuster M erzielbar sind.

Die Figuren 18 bis 20 zeigen jeweils beispielartig verschiedene unidirektionale Wickelmuster M bei einer Umwicklung des Kerns mit zwei Faserbändern F1, F2 je Faserlage FL. Vorschubrichtung T20, die Vorschubgeschwindigkeit V20 und Rotationsgeschwindigkeit ω können beispielsweise derart aufeinander abgestimmt werden, dass der Kern, wie in Figur 18 gezeigt spiralförmig umwickelt wird. Weiterhin kann eine Abstimmung derart erfolgen, dass wie in Figur 19 gezeigt ist, ein parallel-radiales Wickelmuster M erzeugt wird. Auch können Vorschubrichtung T20, die Vorschubgeschwindigkeit V20 und Rotationsgeschwindigkeit ω beispielsweise derart aufeinander abgestimmt werden, dass der Kern, wie in Figur 20 gezeigt parallel-abgewinkelt umwickelt wird.

Erfindungsgemäß ist weiterhin ein Verfahren zur Herstellung eines Faserverbundbauteils B vorgesehen. Demgemäß erfolgt zunächst ein Herstellen eines Faserverbundhalbzeugs H mittels des Durchführung zuvor beschriebenen Verfahrens. Anschließend wird eine Schicht aus einem Matrixmaterial erzeugt, die die Faserlagen FL umgibt und dieses Matrixmaterial zu einer Harzschicht gehärtet. Figur 21 zeigt beispielartig und schematisch eine abgebrochene Querschnittsansicht eines auf diese Weise hergestellten Faserverbundbauteils B mit einer Vielzahl von Faserlagen FL aus einem bandförmigen Faserwerkstoff F und mit einer Harzschicht S.

### Bezugszeichenliste

- 1: Werkzeugsystem
- 10: Halteanordnung
- 11: Haltevorrichtungen der Halteanordnung
- 12: Klemmteile
- 13: Klammern
- 14: Träger
- 14e: Endabschnitt des jeweiligen Trägers
- 15: gewinkelte Haltearme
- 16: erster Träger des jeweiligen gewinkelten Haltearms
- 17: zweiter Träger des jeweiligen gewinkelten Haltearms
- 18: Stützteil des jeweiligen gewinkelten Haltearms
- 19: Ring
- 20: Wickelvorrichtung
- 20a: Außenkontur der Wickelvorrichtung
- 21: erster Rotor
- 22: weiterer Rotor
- 23: Rotationsachse
- 24: Wickelraum
- 25, 26: Materialträger
- 27, 28: Führungsbügel
- 29: Arbeitsraum der Wickelvorrichtung
- 29h: Hüllfläche
- 30: Antriebsvorrichtung
- 31: Stator
- 32: Induktionsspule
- 33: Bolzen
- 40: Wickelvorrichtungs-Positioniereinrichtung
- 41: Führungsanordnung
- 42: erste Führungsschiene der Führungsanordnung
- 43: zweite Führungsschiene der Führungsanordnung
- 44: dritte Führungsschiene der Führungsanordnung
- 45, 55: Halterung
- 50: Roboter
- 51: Armkinematik
- 52: erster Arm
- 53: zweiter Arm
- 54: dritter Arm
- 60: Steuerungsvorrichtung
- 70: Antriebsvorrichtungen der Halteanordnung
- B: Faserverbundbauteil
- b20: Breite des Rotors
- d20: Innendurchmesser des Rotors
- D19: Drehachse
- F: Faserwerkstoff
- F1: erstes Faserband
- F2: zweites Faserband
- FL: Faserlagen
- FL1: erste Faserlage
- FL2: zweite Faserlage
- H: Faserverbundhalbzeug
- K: Kern
- KS: Querschnittsmittellinie des Kerns
- M: Wickelmuster
- PX, PY, PZ: Pfeil
- P1, P2: Umkehrpunkte
- P16: Pfeil
- T: Bewegungsbahn
- T20: Vorschubrichtung der Wickelvorrichtung
- UK: Umfang des Kerns
- V20: Vorschubgeschwindigkeit der Wickelvorrichtung
- ω, ω21, ω22: Rotationsgeschwindigkeit des Rotors

## Patentansprüche

1. Werkzeugsystem (1) zur Herstellung eines Faserverbundhalbzeugs (H), aufweisend:
- eine Halteanordnung (10) mit zumindest zwei Haltevorrichtungen (11) zum Halten eines mit einem band- oder fadenförmigen Faserwerkstoff (F) zu umwickelnden Kerns (K),
- eine Wickelvorrichtung (20) mit zumindest einem um eine Rotationsachse (23) drehbaren Rotor (21, 22), der einen Wickelraum (24) zur Aufnahme des Kerns (K) zumindest abschnittsweise umgrenzt, zumindest einem relativ zu dem Rotor (21, 22) ortsfest angeordneten Materialträger (25, 26) zum Bereitstellen des Faserwerkstoffs (F) und einem dem jeweiligen Materialträger (25, 26) zugeordneten von dem Rotor (21, 22) zu der Rotationsachse (23) hin abstehenden Führungsbügel (27, 28) zum Führen des Faserwerkstoffs (F),
wobei die Wickelvorrichtung (20) translatorisch entlang einer Bewegungsbahn (T) derart bewegbar ist, dass eine Bewegung der Wickelvorrichtung (20) entlang der Bewegungsbahn (T) zumindest eine Richtungskomponente aufweist, die mit der Rotationsachse (23) übereinstimmt,
wobei eine Außenkontur (20a) der Wickelvorrichtung (20) während der Bewegung entlang der Bewegungsbahn (T) eine Hüllfläche (29h) definiert, die einen Arbeitsraum (29) der Wickelvorrichtung (20) definiert, **dadurch gekennzeichnet, dass** die zumindest zwei Haltevorrichtungen (11) als linear verschiebbare Klemmteile (12) oder öffen- und schließbare Klammern (13) ausgebildet sind und dass die Haltevorrichtungen (11) mit der Wickelvorrichtung (20) jeweils funktional gekoppelt sind, und wobei jede einzelne Haltevorrichtung (11) einzeln von dem Kern (K) lösbar und während der translatorischen Bewegung der Wickelvorrichtung (20) jeweils aus dem Arbeitsraum (29) der Wickelvorrichtung (20) heraus bewegbar sind.

2. Werkzeugsystem (1) nach Anspruch 1, wobei der Rotor (21, 22) auf eine der folgenden alternativen Arten ausgebildet ist:
(a) als ein teilbarer Kreisring oder
(b) kreissegmentförmig.

3. Werkzeugsystem (1) nach Anspruch 1 oder 2, wobei die Wickelvorrichtung (20) zumindest einen weiteren drehbaren Rotor (22) aufweist, wobei die Rotoren (21, 22) konzentrisch zu zueinander angeordnet sind.

4. Werkzeugsystem (1) nach einem der voranstehenden Ansprüche, wobei das Werkzeugsystem (1) eine Wickelvorrichtungs-Positioniereinrichtung (40) zum Bewegen der der Wickelvorrichtung (20) entlang der Bewegungsbahn (T) aufweist.

5. Werkzeugsystem (1) nach Anspruch 4, wobei die Wickelvorrichtungs-Positioniereinrichtung (40) eine Führungsanordnung (41) mit zumindest einer in einer ersten Raumrichtung (X) verlaufenden erste Führungsschiene (42), einer an der ersten Führungsschiene (42) geführten und in einer zweiten Raumrichtung (Y) verlaufenden zweite Führungsschiene (43) und einer an der zweiten Führungsschiene (43) geführten dritten Führungsschiene (44), die in einer dritten Raumrichtung (Z) verläuft, und mit einer Halterung (45), die an der dritten Führungsschiene (44) geführt und mit der Wickelvorrichtung (20) verbunden ist, ausgebildet ist.

6. Werkzeugsystem (1) nach Anspruch 4, wobei die Wickelvorrichtungs-Positioniereinrichtung (40) durch einen Roboter (50) gebildet ist, der eine in drei Raumrichtungen (X, Y, Z) bewegbare Armkinematik (51) aufweist, wobei die Armkinematik (51) eine Halterung (55) aufweist, die mit der Wickelvorrichtung (20) verbunden ist.

7. Werkzeugsystem (1) nach Anspruch 5 oder 6, wobei die Halterung (45, 55) die Wickelvorrichtung (20) um eine Halterungsachse drehbar mit der Wickelvorrichtungs-Positioniereinrichtung (40) verbindet.

8. Werkzeugsystem (1) nach einem der voranstehenden Ansprüche, wobei das Werkzeugsystem (1) eine Steuerungsvorrichtung (60) aufweist, mittels derer eine Rotationsgeschwindigkeit (ω) des Rotors (21, 22), eine Vorschubrichtung (T20) und Vorschubgeschwindigkeit (V20) der Wickelvorrichtung (20) entlang der Bewegungsbahn (T) sowie eine jeweilige Position der Haltevorrichtungen (11) einstellbar sind.

9. Verfahren zur Herstellung eines Faserverbundhalbzeugs (H) mit den folgenden Schritten:
- Umwickeln eines durch eine Halteanordnung (10) mit zumindest zwei Haltevorrichtungen (11) gehaltenen Kerns (K) mit einem band- oder fadenförmigen Faserwerkstoff (F) durch translatorisches Bewegen einer Wickelvorrichtung (20) entlang des Kerns (K), wobei die zumindest zwei Haltevorrichtungen (11) als linear verschiebbare Klemmteile (12) oder als öffen- und schließbare Klammern (13) ausgebildet sind;
wobei die Wickelvorrichtung (20) zumindest einen sich um eine Rotationsachse (23) drehenden Rotor (21, 22), der einen Wickelraum (24) definiert, in dem der Kern (K) angeordnet ist, zumindest einen relativ zu dem Rotor (21, 22) ortsfest angeordneten Materialträger (25, 26), von welchem der Faserwerkstoff (F) abgezogen wird, und einen dem jeweiligen Materialträger (25, 26) zugeordneten von dem Rotor (21, 22) zu der Rotationsachse (23) hin abstehenden Führungsbügel (27, 28), der den Faserwerkstoff (F) relativ zu dem Kern (K) führt, aufweist,
wobei das translatorische Bewegen der Wickelvorrichtung (20) derart erfolgt, dass zumindest eine Richtungskomponente der Bewegung der Wickelvorrichtung (20) mit der Rotationsachse (23) übereinstimmt, wobei eine Außenkontur (20a) der Wickelvorrichtung (20) während der Bewegung entlang des Kerns (K) eine Hüllfläche (20h) definiert, die einen Arbeitsraum (29) der Wickelvorrichtung (20) definiert,
- Lösen jeweils einer Haltevorrichtung (11) von dem Kern (K) und Herausbewegen dieser Haltevorrichtungen (11) aus dem Arbeitsraum (29) der Wickelvorrichtung (20) während des Umwickelns eines Haltebereichs (K11) des Kerns (K), an welchem dieser von der jeweiligen Haltevorrichtung (11) gehalten wird.

10. Verfahren nach Anspruch 9, wobei der band- oder fadenförmige Faserwerkstoff (F) als ein Roving, ein Prepregband oder dergleichen vorliegt.

11. Verfahren nach Anspruch 9 oder 10, wobei beim Umwickeln des Kerns (K) eine Vielzahl von Faserlagen (FL) ausgebildet wird.

12. Verfahren nach Anspruch 11, wobei eine Vorschubrichtung (T20) und eine Vorschubgeschwindigkeit (V20), mit welcher die Wickelvorrichtung (20) entlang des Kerns (K) bewegt wird, sowie eine Rotationsgeschwindigkeit (ω), mit welcher der Rotor (21, 22) gedreht wird, derart aufeinander abgestimmt sind, dass in den Faserlagen (FL) jeweils ein vorbestimmtes Wickelmuster (M) ausgebildet wird.

13. Verfahren nach einem der Ansprüche 9 bis 12, wobei der Kern (K) eine geschlossene Form ausbildet.

14. Verfahren zur Herstellung eines Faserverbundbauteils, aufweisend:
- Herstellen eines Faserverbundhalbzeugs (H) mittels Durchführung eines Verfahrens nach einem der Ansprüche 9 bis 13,
- Erzeugen einer den Faserwerkstoff (F) umgebenden Schicht aus einem Matrixmaterial,
- Härten des Matrixmaterials der Harzschicht (S).

## Claims

1. Tool system (1) for producing a semifinished fibre-composite product (H), comprising:
- a holding arrangement (10) with at least two holding devices (11) for holding a core (K) around which a fibrous material (F) in the form of a strip or filament is to be wound,
- a winding device (20) with at least one rotor (21, 22) which can be rotated about an axis of rotation (23) and bounds a winding space (24) for receiving the core (K) at least in certain portions, with at least one material carrier (25, 26), arranged fixed in place relative to the rotor (21, 22), for providing the fibrous material (F), and with a guide lever (27, 28), which is assigned to the respective material carrier (25, 26) and protrudes from the rotor (21, 22) towards the axis of rotation (23), for guiding the fibrous material (F),
wherein the winding device (20) can be moved in translation along a movement path (T) in such a way that a movement of the winding device (20) along the movement path (T) comprises at least one direction component which coincides with the axis of rotation (23),
wherein, during the movement along the movement path (T), an outer contour (20a) of the winding device (20) defines a lateral surface (29h), which defines a working space (29) of the winding device (20), **characterized in that** the at least two holding devices (11) are in the form of linearly displaceable clamping parts (12) or openable and closable clamps (13), and **in that** the holding devices (11) are respectively functionally coupled to the winding device (20), and wherein each individual holding device (11) is individually detachable from the core (K) and can be moved out of the working space (29) of the winding device (20) during the translational movement of the winding device (20).

2. Tool system (1) according to Claim 1, wherein the rotor (21, 22) is formed in one of the following alternative ways:
(a) as a divisible circular ring or
(b) in the shape of a segment of a circle.

3. Tool system (1) according to Claim 1 or 2, wherein the winding device (20) comprises at least one further rotatable rotor (22), wherein the rotors (21, 22) are arranged concentrically in relation to one another.

4. Tool system (1) according to one of the preceding claims, wherein the tool system (1) comprises a winding-device positioning apparatus (40) for moving the winding device (20) along the movement path (T).

5. Tool system (1) according to Claim 4, wherein the winding-device positioning apparatus (40) is in the form of a guide arrangement (41) with at least one first guide rail (42) running in a first spatial direction (X), with a second guide rail (43) which is guided on the first guide rail (42) and runs in a second spatial direction (Y), and with a third guide rail (44) which is guided on the second guide rail (43) and runs in a third spatial direction (Z), and with a mount (45), which is guided on the third guide rail (44) and is connected to the winding device (20) .

6. Tool system (1) according to Claim 4, wherein the winding-device positioning apparatus (40) is formed by a robot (50), which comprises an arm kinematic mechanism (51) that can be moved in three spatial directions (X, Y, Z), wherein the arm kinematic mechanism (51) comprises a mount (55) which is connected to the winding device (20).

7. Tool system (1) according to Claim 5 or 6, wherein the mount (45, 55) connects the winding device (20) to the winding-device positioning apparatus (40) rotatably about a mount axis.

8. Tool system (1) according to one of the preceding claims, wherein the tool system (1) comprises a control device (60), by means of which a rotational speed (ω) of the rotor (21, 22), an advancement direction (T20) and advancement speed (V20) of the winding device (20) along the movement path (T), and a respective position of the holding devices (11) can be set.

9. Method for producing a semifinished fibre-composite product (H), having the following steps:
- winding a fibrous material (F) in the form of a strip or filament around a core (K), held by a holding arrangement (10) by means of at least two holding devices (11), by moving a winding device (20) in translation along the core (K), wherein the at least two holding devices (11) are in the form of linearly displaceable clamping parts (12) or openable and closable clamps (13);
wherein the winding device (20) comprises at least one rotor (21, 22), which rotates about an axis of rotation (23) and defines a winding space (24) in which the core (K) is arranged, at least one material carrier (25, 26), which is arranged fixed in place relative to the rotor (21, 22) and from which the fibrous material (F) is drawn off, and a guide lever (27, 28), which is assigned to the respective material carrier (25, 26), protrudes from the rotor (21, 22) towards the axis of rotation (23), and guides the fibrous material (F) relative to the core (K),
wherein the winding device (20) is moved in translation in such a way that at least one direction component of the movement of the winding device (20) coincides with the axis of rotation (23), wherein, during the movement along the core (K), an outer contour (20a) of the winding device (20) defines a lateral surface (20h), which defines a working space (29) of the winding device (20),
- detaching a respective holding device (11) from the core (K) and moving these holding devices (11) out of the working space (29) of the winding device (20) while winding takes place around a holding region (K11) of the core (K) at which said core is held by the respective holding device (11).

10. Method according to Claim 9, wherein the fibrous material (F) in the form of a strip or filament is present as a roving, a prepreg strip or the like.

11. Method according to Claim 9 or 10, wherein a multiplicity of fibre layers (FL) is formed when winding takes place around the core (K).

12. Method according to Claim 11, wherein an advancement direction (T20) and an advancement speed (V20) with which the winding device (20) is moved along the core (K), and a rotational speed (ω) at which the rotor (21, 22) is rotated, are matched to one another in such a way that a respective predetermined winding pattern (M) is formed in the fibre layers (FL).

13. Method according to one of Claims 9 to 12, wherein the core (K) forms a closed shape.

14. Method for producing a fibre composite component, comprising the following steps:
- producing a semifinished fibre-composite product (H) by carrying out a method according to one of Claims 9 to 13,
- creating a matrix-material layer that surrounds the fibrous material (F),
- curing the matrix material of the resin layer (S).

## Revendications

1. Système d'outil (1) pour la fabrication d'un produit semi-fini composite renforcé de fibres (H), comprenant :
- un ensemble de retenue (10) doté d'au moins deux dispositifs de retenue (11) servant à retenir un noyau (K) autour duquel une matière fibreuse (F) en forme de bande ou de fil doit être enroulée,
- un dispositif d'enroulement (20) doté d'au moins un rotor (21, 22) rotatif autour d'un axe de rotation (23), lequel rotor délimite au moins dans certaines parties un espace d'enroulement (24) servant à la réception du noyau (K), d'au moins un support de matériau (25, 26) disposé de manière fixe par rapport au rotor (21, 22) pour la fourniture de la matière fibreuse (F) et d'un étrier de guidage (27, 28) associé au support de matériau (25, 26) respectif et faisant saillie à partir du rotor (21, 22) vers l'axe de rotation (23) pour le guidage de la matière fibreuse (F),
le dispositif d'enroulement (20) étant déplaçable en translation le long d'une trajectoire de déplacement (T) de telle sorte qu'un déplacement du dispositif d'enroulement (20) le long de la trajectoire de déplacement (T) comprenne au moins une composante directionnelle qui coïncide avec l'axe de rotation (23), un contour extérieur (20a) du dispositif d'enroulement (20) pendant le déplacement le long de la trajectoire de déplacement (T) définissant une surface d'enveloppe (29h) qui définit un espace de travail (29) du dispositif d'enroulement (20),
**caractérisé en ce que** les au moins deux dispositifs de retenue (11) sont réalisés sous forme de parties de serrage (12) mobiles linéairement ou sous forme de pinces (13) pouvant être ouvertes et fermées, et **en ce que** les dispositifs de retenue (11) sont accouplés respectivement fonctionnellement au dispositif d'enroulement (20), et chaque dispositif de retenue (11) individuel pouvant être détaché individuellement du noyau (K) et pouvant être déplacé respectivement hors de l'espace de travail (29) du dispositif d'enroulement (20) pendant le déplacement de translation du dispositif d'enroulement (20).

2. Système d'outil (1) selon la revendication 1, le rotor (21, 22) étant réalisé selon l'une des manières alternatives suivantes :
(a) sous la forme d'une bague circulaire divisible ou
(b) en forme de segment de cercle.

3. Système d'outil (1) selon la revendication 1 ou 2, le dispositif d'enroulement (20) comprenant au moins un autre rotor rotatif (22), les rotors (21, 22) étant disposés de manière concentrique les uns par rapport aux autres.

4. Système d'outil (1) selon l'une des revendications précédentes, le système d'outil (1) comprenant un moyen de positionnement de dispositif d'enroulement (40) servant au déplacement du dispositif d'enroulement (20) le long de la trajectoire de déplacement (T).

5. Système d'outil (1) selon la revendication 4, le moyen de positionnement de dispositif d'outil (40) étant réalisé sous la forme d'un ensemble de guidage (41) doté d'au moins un premier rail de guidage (42) s'étendant dans une première direction spatiale (X), d'un deuxième rail de guidage (43) guidé sur le premier rail de guidage (42) et s'étendant dans une deuxième direction spatiale (Y) et d'un troisième rail de guidage (44) guidé sur le deuxième rail de guidage (43), lequel troisième rail de guidage s'étend dans une troisième direction spatiale (Z), et doté d'un support (45) qui est guidé sur le troisième rail de guidage (44) et relié au dispositif d'enroulement (20) .

6. Système d'outil (1) selon la revendication 4, le moyen de positionnement de dispositif d'enroulement (40) étant formé par un robot (50) qui comprend un mécanisme cinématique de bras (51) déplaçable dans trois directions spatiales (X, Y, Z), le mécanisme cinématique de bras (51) comprenant un support (55) qui est relié au dispositif d'enroulement (20).

7. Système d'outil (1) selon la revendication 5 ou 6, le support (45, 55) reliant le dispositif d'enroulement (20) au moyen de positionnement de dispositif d'enroulement (40) de manière rotative autour d'un axe de support.

8. Système d'outil (1) selon l'une des revendications précédentes, le système d'outil (1) comprenant un dispositif de commande (60) au moyen duquel une vitesse de rotation (ω) du rotor (21, 22), une direction d'avance (T20) et une vitesse d'avance (V20) du dispositif d'enroulement (20) le long de la trajectoire de déplacement (T) ainsi qu'une position respective des dispositifs de retenue (11) sont réglables.

9. Procédé pour la fabrication d'un produit semi-fini composite renforcé de fibres (H) comportant les étapes suivantes :
- enroulement d'une matière fibreuse (F) en forme de bande ou de fil autour d'un noyau (K) retenu par le biais d'un ensemble de retenue (10) doté d'au moins deux dispositifs de retenue (11) par déplacement en translation d'un dispositif d'enroulement (20) le long du noyau (K), les au moins deux dispositifs de retenue (11) étant réalisés sous forme de parties de serrage (12) mobiles linéairement ou sous forme de pinces (13) pouvant être ouvertes et fermées ;
le dispositif d'enroulement (20) comprenant au moins un rotor (21, 22) tournant autour d'un axe de rotation (23), lequel rotor définit un espace d'enroulement (24) dans lequel le noyau (K) est disposé, au moins un support de matériau (25, 26) disposé de manière fixe par rapport au rotor (21, 22), duquel la matière fibreuse (F) est retirée, et un étrier de guidage (27, 28) associé au support de matériau (25, 26) respectif et faisant saillie à partir du rotor (21, 22) vers l'axe de rotation (23), lequel étrier de guidage guide la matière fibreuse (F) par rapport au noyau (K),
le déplacement en translation du dispositif d'enroulement (20) s'effectuant de telle sorte qu'au moins une composante directionnelle du déplacement du dispositif d'enroulement (20) coïncide avec l'axe de rotation (23), un contour extérieur (20a) du dispositif d'enroulement (20) pendant le déplacement le long du noyau (K) définissant une surface d'enveloppe (20h) qui définit un espace de travail (29) du dispositif d'enroulement (20),
- détachement respectivement d'un dispositif de retenue (11) du noyau (K) et déplacement de ces dispositifs de retenue (11) hors de l'espace de travail (29) du dispositif d'enroulement (20) pendant l'enroulement autour d'une région de retenue (Kll) du noyau (K), au niveau de laquelle celui-ci est retenu par le dispositif de retenue (11) respectif.

10. Procédé selon la revendication 9, la matière fibreuse (F) en forme de bande ou de fil étant disponible sous la forme d'un roving, d'une bande préimprégnée ou similaire.

11. Procédé selon la revendication 9 ou 10, une pluralité de couches de fibres (FL) étant réalisée lors de l'enroulement autour du noyau (K).

12. Procédé selon la revendication 11, une direction d'avance (T20) et une vitesse d'avance (V20), à laquelle le dispositif d'enroulement (20) est déplacé le long du noyau (K), ainsi qu'une vitesse de rotation (ω), à laquelle le rotor (21, 22) est entraîné en rotation, étant adaptées les unes aux autres de telle sorte qu'un motif d'enroulement (M) prédéfini soit respectivement formé dans les couches de fibres (FL).

13. Procédé selon l'une des revendications 9 à 12, le noyau (K) formant une forme fermée.

14. Procédé pour la fabrication d'une pièce composite renforcée de fibres, comprenant :
- la fabrication d'un produit semi-fini composite renforcé de fibres (H) par mise en œuvre d'un procédé selon l'une des revendications 9 à 13,
- la production d'une couche, entourant la matière fibreuse (F), en matière de matrice,
- durcissement de la matière de matrice de la couche de résine (S) .
